# EUROPEAN PATENT APPLICATION

(11) **EP 3 722 120 A1**
(43) Date of publication of application: **14.10.2020**
(21) Application number: 19168228.5
(22) Date of filing: 09.04.2019
(51) Int. Cl.: B60G 7/00

(54) **SPRING LINK FOR A VEHICLE SUSPENSION**

(71) Applicant: RAUFOSS TECHNOLOGY AS, 2830 Raufoss (NO)
(72) Inventor: KHAJEHGANI, Ali, 2827 Hunndalen (NO)
(74) Representative: Leinweber & Zimmermann

(57) **Abstract**

A Spring link (10) for a vehicle suspension, extending along an axial direction (x) and comprising a bottom (4) extending axially and in a transverse direction (y) and, at its both transverse sides, side structures (5) extending axially and along a height direction (z), and being connected with each other only at their bottom side, a wheel-side mounting portion (7a, 7b) and a vehicle-side mounting portion (8a, 8b) at its respective axial end portions (7, 8), and a seat (S) for spring/damping means arranged axially between the axial end portions in a transversely outwardly bulged middle portion (6) of the bottom (4), and an intermediate portion axially at a transition into the bulged middle portion, wherein at a first portion (11) axially closer to the intermediate portion than to the center (13) of the bulged portion, an inertia ratio defined by the area moment of inertia effective for bending in height direction divided by the area moment of inertia effective for bending in transverse direction of the cross-section of a side structure taken alone is lower than 1.8, preferably lower than 1.4, in particular lower than 1.0, and/or an upper half inertia ratio being the inertia ratio of only that part of the cross-section of one/the side structure having passed beyond half of its height, taken alone, is lower than 0.36, preferably lower than 0.32, in particular lower than 0.28.

## Description

The invention relates to a spring link for a vehicle suspension. A spring link's main function is to guide a wheel in a wheel suspension and to transmit all forces acting on a wheel during the operation of a vehicle to the car body via shock absorbers and springs.

Since such spring links are exposed to strong (mostly axial, but also vertical, with reference to the spring link) forces during steering manoeuvers or by driving on uneven road surfaces, it is of importance that the spring link has a high rigidity or stiffness to guarantee the required stability of the component. Namely, in case of a too low stiffness, forces exceeding the stiffness limits could result in a deformation of the spring link and could negatively affect the stability and functionality of the spring link.

In particular, the invention is directed to a spring link for a vehicle suspension, extending along an axial direction and comprising: a bottom extending axially and in a transverse direction and, at its both transverse sides, side structures extending axially and along a height direction, and being connected with each other only at their bottom side, a wheel-side mounting portion and a vehicle-side mounting portion at its respective axial end portions, and a seat for spring/damping means arranged axially between the axial end portions in a transversely outwardly bulged middle portion, and an intermediate portion axially at a transition into the bulged middle portion.

Several spring links and designs thereof are known. One type of a spring link is made of an elongated hollow connector with cross-section in form of a closed profile, for instance of rectangular form, where a seat for the spring/damping means is situated on an upper side wall of the closed profile. However, the relevant distance to the road surface being given by the height position of the lower (bottom) wall of the profile, a problem arises in having both a sufficiently large distance of the spring link from the road surface as well as freedom regarding the selection also of spring/damping devices with a larger length in its damping direction.

In order to overcome such disadvantages, solutions were proposed to have the seat for the spring and/or damping means placed on the bottom side of the spring link. To this end, an opening would be made in the top side of the closed profile.

Further, attempts were made to completely omit the top side of the closed profile, arriving at a U-shaped profile. This is disclosed, for instance, in DE 10 2006 032 595 A1. Therein, the stiffness of the spring link is set to be provided by an outwardly everted spring seat and by outwardly bent side walls at their top side.

Other solutions are known, for instance disclosed in DE 10 2004 008 957 A1 where the spring link, although having a generally U-shaped base profile, has additional crescent-shaped elements connecting both side walls at their top side to further increase the stiffness, thereby renouncing a completely open profile.

A further spring link is known from DE 10 2017 117 309 A1. The spring link shown therein has side walls extending essentially orthogonally from the bottom and being essentially uniform over the axial middle portion.

It is an object of the invention to provide a spring link providing for a satisfying compromise regarding sufficient stiffness without excessive weight, simplicity of fabrication and flexibility in the application range.

This object is achieved by the invention by providing a spring link as discussed in the initial portion of the description with the features of claim 1 and essentially characterized in that at a first portion axially closer to the intermediate portion than to the center of the bulged portion, an inertia ratio (I_{y}/I_{z}) defined by the area moment of inertia (I_{y}) effective for bending in height direction divided by the area moment of inertia (I_{z}) effective for bending in transverse direction of the cross-section of a side structure taken alone is lower than 1.8, preferably lower than 1.4, in particular lower than 1.0, even lower than 0.9 or 0.75 and/or an upper half inertia ratio defined by the area moment of inertia effective for bending in height direction divided by the area moment of inertia effective for bending in transverse direction of that part of the cross-section of one / the side structure having passed beyond half of its height (H/2), taken alone, is lower than 0.36, preferably lower than 0.32, in particular lower than 0.28.

Namely, the inventors found out that, although the spring link disclosed for instance in DE 10 2006 032 595 A1 might indeed give satisfying stiffness when manufactured from steel, said spring link design has a stiffness below acceptable values unless using a significant amount of additional material to compensate for a change in material to one having lower Young's modulus, so that reinforcing elements connecting the side walls also at their top side opposite to the bottom, as disclosed in DE 10 2004 008 957 A1, appear indispensable. However, by using a spring link design according to the invention, a solution is provided allowing also the use of, for instance, aluminium as material of the spring link without additional reinforcing top connection of the side wall structures at their top side, and also avoiding excessive additional amounts of material.

The respective area moments of inertia I_{y}=∬z²dydz, I_{z}=∬y²dydz effective for bending in height direction respectively for bending in transverse direction are those of the cross-section of the side structure taken alone, that is regarding only the side structure and referenced via its neutral axis system with center at the area center of gravity of the side structure cross-section. This is not equal to (or to be confused with) the contribution of the side structure to the area moment of inertia of the total spring link cross-section with reference to the neutral axis system with origin at the area center of gravity of the total spring link cross-section.

The intermediate portion at the transition means here a portion ranging from where the bottom width starts to increase with respect to the bottom width at the respective axial end portion up to where the bottom width reaches a quarter of the bottom width increase present at maximum bulging.

Preferably, at said first portion a dimensionless transverse area moment of inertia defined by the area moment of inertia effective for bending in transverse direction of the cross-section of the side wall structure divided by the product of the area and the squared profile length of said cross-section is, in %, larger than 1.2, preferably larger than 1.6, in particular larger than 2.0, and/or the upper half dimensionless transverse area moment of inertia is, in % larger than 2.0, preferably larger than 2.6, in particular larger than 3.2. The profile length of the cross-section of the side wall structure is the length of the curve of the side wall structure cross-section starting from its bottom side end to the opposite end and taken at the center (half of the wall thickness each to the left and to the right of said center). That is, absolute values for the area moment of inertia can be selected according to the appropriate use, by scaling up such dimensionless transverse area moments of inertia by respective increase of the profile length and the area of the cross-section, that is also via an increase in the thickness of the side wall structure. For said dimensionless transverse area moment of inertia, it is preferred that it is not larger than 7%, preferably not larger than 6%, in particular not larger than 5%.

Preferably, the inertia ratio of the side structure at maximum bulging of the bulged portion is lower than 2.4, preferably lower than 2.0, in particular lower than 1.6, and/or the respective upper half inertia ratio is lower than 0.8, preferably lower than 0.72, in particular lower than 0.64. These definitions are the same as given above, but not repeated again in full wording. Maximum bulging of the bulged portion is preferably close to the center of the seat for the spring/damping means. For axially symmetrical structures this could be the axial center of the spring link. However, the portions axially to the left and to the right of said center do not need to be configured symmetric.

Preferably, at maximum bulging the dimensionless transverse area moment of inertia is larger than 0.6, preferably larger than 0.9, in particular larger than 1.2, and/or the upper half dimensionless transverse area moment of inertia is larger than 1.6, preferably larger than 2.0, in particular larger than 2.4, all these values in %. Again, the definitions are those as defined above for the localization at the first portion, now applied to the axial portion of maximum bulging. Should the maximum bulging be of axially extended range, what is then meant is the axial center of the region of maximum bulging. For said dimensionless transverse area moment of inertia, it is preferred that it is not larger than 6%, preferably not larger than 5%, in particular not larger than 4%.

Preferably, the inertia ratio at the first portion is by more than 10%, preferably more than 20%, in particular more than 30% lower than the inertia ratio at maximum bulging.

Preferably, the bottom extends axially along its center line and, an outer contour of the side structure being defined by the curve of its side opposite to its bottom side in projection onto the axial-transversal plane, an outer ratio defined by the ratio of the transverse distance between the outer contour and the center line at the first portion to the corresponding distance at maximum bulging is at least 0.8. In particular, said outer contour is preferably not following the bulging of the bottom in the bulged middle portion.

This aspect is also considered favorable irrespective of the inertia ratio. Accordingly, the invention discloses also independently and in particular independently of the inertia ratio a spring link for a vehicle suspension, extending along an axial direction and comprising: a bottom extending axially in a transverse direction and, at its both transverse sides, side structures extending axially and along a height direction and being connected with each other only at their bottom side, a wheel-side mounting portion and a vehicle-side mounting portion at its respective axial end portions, and a seat for spring/damping means arranged axially between the axial end portions in a transverse and outwardly bulged middle portion, and an intermediate portion axially at a transition into the bulged middle portion of the bottom, wherein the bottom extends axially along its center line and wherein, an outer contour of the side structure being defined by the curve of its side opposite to its bottom side in projection onto the axial-transversal plane, an outer ratio defined by the ratio of the transverse distance between the outer contour and the center line at the first portion to the corresponding distance at maximum bulging is at least 0.8, preferably at least 0.84.

It is also preferred that the first portion has an axial extension up to the intermediate portion at said transition into the bulged middle portion, and the outer ratio is larger than 0.6, in particular larger than 0.7 over said extension. Further, it is preferred that the feature of the outer ratio being at least 0.8 is valid in an interval centered around maximum bulging and with axial length of at least half the axial length of the bulging portion, preferably at least 60% thereof, and/or of larger than 36% of the overall axial length of the spring link, preferably larger than 42%, in particular larger than 48% thereof.

Preferably, the axial distance of the first portion from maximum bulging is at least 20 % of the axial length of the bulged portion, preferably at least 25%, in particular at least 30 %, and/or larger than 15 % of the overall axial length of the spring link, in particular larger than 20 % thereof.

Preferably, the spring link has a second portion with one or more of the characteristics defined in the preceding claims for the first portion, but at the other axial side of maximum bulging than the first portion. That is, if the intermediate portion initially mentioned is axially at a transition from the side of the wheel-side mounting portion into the bulged middle portion, the characteristics regarding the ratios and properties explained above may also be present at the second portion being closer to a (second) intermediate portion axially at a transition at the axial end portion side into the bulged middle portion than to the center of the bulged portion, and vice versa.

Preferably, the side structures each comprise an inner wall forming together with a bottom of the spring link an inner structure thereof which has an essentially U-shaped cross-section, the inner walls having a top inner contour at their top side opposite to their bottom side, wherein at said first and/or second portion, an inner ratio defined by the ratio of the transverse distance between the top inner contour and the center line to the corresponding distance at the maximum bulging is less than 0.9 and/or a first value given by the outer ratio divided by the inner ratio of larger than 1.1, preferably larger than 1.2. Preferably, also the top inner contour is transversally bulged to the outside in width direction. Said top inner contour may have a shape closer to the shape of a beam under axial compression beyond Euler instability than to a pure axial extension.

Preferably, at said first and/or second portion, a contour ratio defined by the transverse distance between the outer contour and the top inner contour to the distance between the top inner contour and the center line is larger than 0.25, preferably larger than 0.33, in particular larger than 0.5, and preferably lower than 1.3, and/or the product of said contour ratio with the first value is larger than 0.30, preferably larger than 0.36, in particular larger than 0.42. The portion of the side wall structure transversally between the top inner contour and the outer contour may be provided by a transverse flange portion of the side wall structure.

Preferably, regarding height direction/expansion, the lower part of inner side wall has, at least in the region of the seat, a curved form with inversed averaged curvature being preferably more than 20% and/or less than 90% of the height extension of the inner wall in the height direction. That is, contrary to an essential orthogonal arrangement of the lower inner wall at crossover to bottom, a curved form is preferred. For instance, said lower portion could be in form like an arc with radius R, R being in said range. However, the form is not limited to an arc, any kind of curved shape may be envisaged.

Preferably, a fluke ratio being the ratio of the transverse distance of the outer contour from the center line of at least one side structure to the overall axial length, is, averaged between first and second portion and/or over an interval of more than 40% of axial overall length and centered at the seat, larger than 0.14, preferably than 0.16, in particular than 0.18. In said preferred configuration, the shape of the spring link in plan view seen from above is, therefore, more fluke-like than slender, favoring the structural tendencies provided by the invention.

Preferably, the squared gradient of the outer contour averaged between the first and the second portion is lower than 0.08, even lower than 0.07, in particular lower than 0.05, even lower than 0.04. This may bring advantages not only in shape but also in the manufacturing process, in case of forming/bending of sheet material.

The spring link may have, in the region of the first portion, the second portion and/or the portion of maximum bulging, an outer flange in height direction. Such outer flange would extend essentially in height direction and, as seen with reference to the profile line, forming the last portion thereof beyond the crossover forming part of the outer contour. The height extension of the outer flange may be more than 3%, preferably more than 10%, in particular more than 20% of the height extension of the side wall structure, at least at the first and/or second portion.

Preferably, a surface orientation of the seat is inclined with respect to the axial direction. Although, also surface orientations of the seat in the axial-transversal plane are envisaged.

Preferably, the spring link has at least one more mounting portion, in particular in form of openings in the inner side walls, for mounting additional components of the vehicle suspension. This allows easy mounting not only at the wheel-side and vehicle-side, but also of optional additional components.

Preferably, the spring link is of one piece and/or made from aluminium or an aluminium alloy. This allows quite lower weights of the link and, therefore, advantages conferred to vehicles having such spring links. In particular, a 2000 series alloy, a 4000 series alloy, a 5000 series alloy, a 6000 series alloy, or a 7000 series alloy may be used. Among these, aluminium alloys of the 6000 or 7000 series are most preferred, for instance one could use special aluminium alloys having specification 6060 or 6082, giving, already from the material selection point of view, a good relationship between stiffness and weight. A thickness of the cross-sectional profile in the range 3 mm to 7 mm is then preferred (for steel, 1.5 mm to 3 mm may be sufficient)

Preferably, the spring link has a stiffness against axial compression in the axial direction of more than 25 kN/mm and /or a stiffness in height direction of more than 5 kN/mm. In particular, for intended use for passenger cars, stiffness values against axial compression are preferred to be larger than 30 kN/mm (axial) and 7 kN/mm (vertical), while, by suitable scaling up in length and cross-sectional area, for trucks stiffness values of 40, preferably larger than 45, in particular larger than 50 and/or height direction stiffness of 10, preferably larger than 14, in particular larger than 18 are preferred, each in kN/mm.

Further, the invention is directed to a vehicle suspension having a spring link with one or more of the above-mentioned features, as well as a (motor-driven) vehicle having such a spring link.

Regarding manufacturing of the spring link, it is preferred that one manufactures the spring link in one piece, and from one piece. Starting materials can be pieces of sheet material of flat surface or, having already preformed wave structure in the material, to facilitate bending operations to obtain the cross-sectional form of the spring link. It is also envisaged to perform forming steps on the sheet-like material of a length larger than the length of the spring link, and to obtain two or more spring links by cutting the sheet material at some stage. Accordingly, the manufacturing steps to arrive at the spring link may contain bending operations (hot or cold stamping), cutting operations and also drilling operations. A preferred manufacturing method is press-hardening, however, the invention is not limited thereto. Rather, all kinds of manufacturing processes and thermal treatments can be applied to obtain the spring link, for instance one could start out with an extruded part, thereafter brought by forming/bending into final shape of the spring link. For the forming process semi-hot forming or hot forming is preferred.

Further, the spring link is preferably made without any welding operation, for simplified manufacturing.

The connection of the spring link within the vehicle suspension can be made via rubber or rubber/metal bearings, and clamping for instance by screws, but can be generally done according to the usual techniques in the art.

As can be seen from the above, the spring link/transverse link respectively suspension arm of the invention has specially configured side wall structures having advantages in particular when using aluminium as material not having the mechanical properties of steel in particular regarding the Young modulus. However, also when steel is used as material, the invention may provide for advantageous stiffness to weight ratios.

Further features, details and advantages of the invention are described below with reference to the enclosed figures, wherein
- Fig. 1: is a side view of a spring link,
- Fig. 2: is a plan view of the spring link,
- Fig. 3: is the view of Fig. 2, showing also a spring and a shock absorber,
- Fig. 4: is a cross-section of Fig. 2, taken along the line IV-IV, and
- Fig. 5: is a cross-section taken along the line V-V of Fig. 2, and
- Fig. 6: is an explanatory sketch.

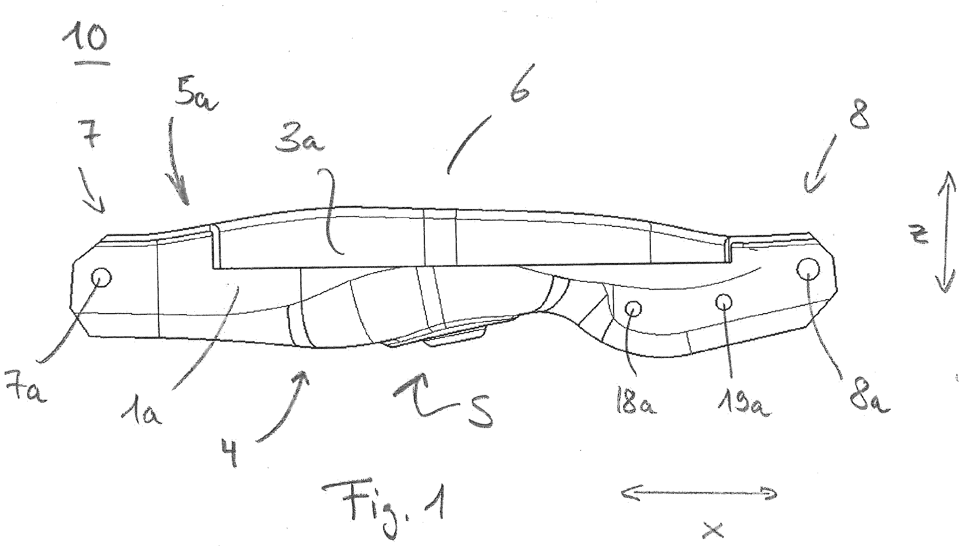

As can be seen from Fig. 1, in an embodiment of the invention, spring link (suspension arm) 10 extends along axial direction x between two axial end portions 7 and 8. End portion 7 is configured for the vehicle-side mounting within a vehicle suspension, and end portion 8 is configured for wheel-side mounting. To this end, mounting holes 7a and 8a, respectively, are provided in a side structure 5a on one side of a bottom 4 of spring link 10, and matching mounting holes 7b and 8b (not shown in Fig. 1) are provided in the other side wall structure 5b of spring link 10.

In the present embodiment, both side wall structures 5a, 5b are configured symmetrically to each other with respect to an axial center line C_{L} of spring link 10. However, the side wall structures need not to be identical in this regard, it is merely a preferred embodiment. Therefore, for ease of the description, features of the side wall structure subsequently discussed shall also be explained (omitting references to the respective sides), by generally referring to side wall structure 5.

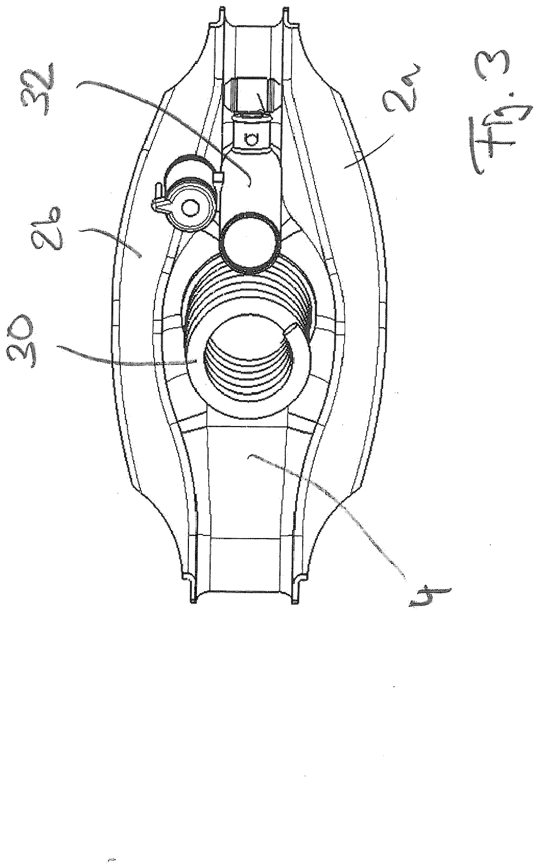

As can be seen further from Fig. 1, in an axial middle portion a seat S is provided. The seat S is slightly inclined to the axial direction x to extend also in a height direction z. However, the seat S may also be planar in an axial-transversal xy plane, according to the design of the vehicle suspension for which the spring link is to be used. Further, the surface structure of the bottom 4 at seat S is not further delimited, in the subject embodiment it could have a ring-like indentation. As other examples, also just structureless planar surfaces are envisaged, as well as, for instance, the overall seat face being formed as indentation with respect to bottom 4. That is, the configuration of the seat S can be done appropriately, depending also of the spring/damping means to be used (with or without additional shock absorber, etc.). In the exemplified embodiment, application of the spring link is shown in Fig. 3 for a spring 30 seated on seat S, while a shock absorber 32 is additionally provided between seat S and axial end 8, and mounted via additional mounting holes 18a, 18b in side walls 5a, 5b. Further mounting holes 19a, 19b are provided for additional elements, such as, for instance, a stabilizing bar.

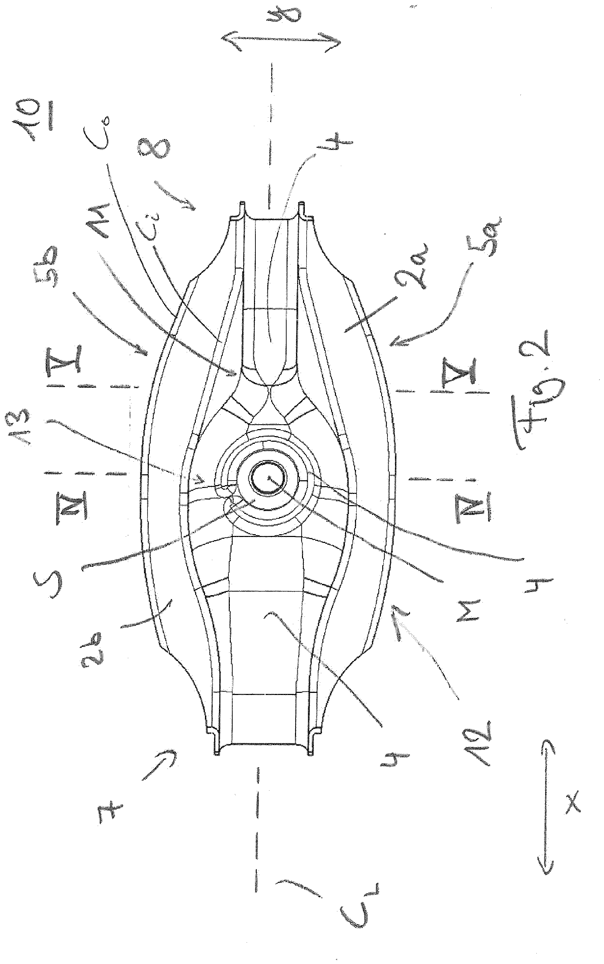

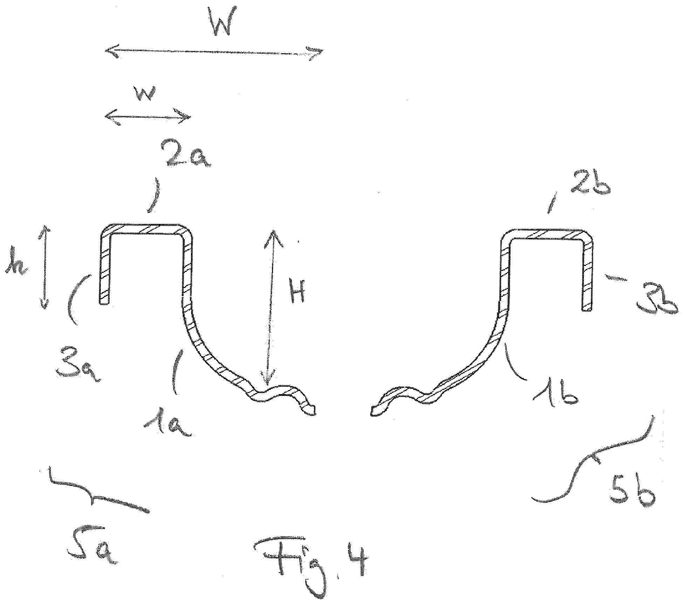

As already partly done above, directions are defined to better characterize features of the side wall structures 5 further discussed below. As already said, the length extension of spring link 10 goes along axial direction x. In the shown embodiment (Fig. 2), axial center axis C_{L} is also a symmetry axis for bottom 4 and side wall structures 5. However, spring link 10 does not need to extend perfectly axially, such that the center line of spring link 10 may also be somewhat curved. That is, end portions 7 and 8 need not to be centered around straight axis x. The paper plane of Fig. 1 is spanned by the axial direction x and the damping direction of the spring/damping device. Accordingly, the (local) width direction y is orthogonal to the local tangent to the central line and the damping direction. In the shown embodiment, (uniform) width direction y and axial direction x span the paper plane of Fig. 2. The height direction z is, accordingly, orthogonal thereto and is effective for defining the height H of side wall structure 5 over bottom 4 (Fig. 4), which may vary along the axial extension, as seen in Fig. 1.

As can be seen from the cross-sectional view of Fig. 4, at least one of the side wall structures 5, in the preferred embodiment both side wall structures 5, comprise an inner wall 1 (1a, 1b), a transversely extending flange portion 2 (2a, 2b) at the top side opposite to the bottom side of inner wall 1a, and a further (outer) flange portion 3 (3a, 3b) extending essentially in the height direction. As can be seen from Fig. 1, the outer flange portion 3a extends in the axial direction x over more than half of the axial length of spring link 10. It has its outermost edge at the same height level. In the exemplified embodiment, however, these are only possible implementations of the outer flange and are not mandatory. However, it is explicitly preferred that the outer flange 3 is present in particular in portions between each of the axial ends 7 and 8, and the middle portion with the seat S. The width of the transverse flange portion 2 is denoted with w, the height of the outer flange portion 3 with h.

As can be seen from Fig. 2, in consequence of the transverse (y) dimension of seat S being larger than the bottom width of at least one axial end portion (in the exemplified embodiment of both axial end portions 7, 8), the middle portion is transversely outwardly bulged at the bottom. Also the inner contour Cᵢ of the side wall structures 5 at the top side of their inner wall 1 is bulged outwards around the bottom bulging. Said inner contour Cᵢ is essentially parallel to the axial direction x at the axial end portions 7, 8, and is then outwardly bulged with maximum bulging approximately at the axial center M of seat S. However, the maximum bulging of inner contour Cᵢ does not need to axially conform to M, but could be displaced axially, but preferably not more than 30% of the overall axial length of the spring link, preferably no more than 25 % thereof, in particular not more than 15 % thereof.

The shape of the inner contour Cᵢ in the ascending or, respectively, descending portion preferably avoids gradients (d/dx Cᵢ(x)) larger than 1, preferably larger than 0.8, in particular larger than 0.6. It may be more similar to the shape of the function sin²(πx/L) where x is running from one axial end to the other, having in particular also an inflection point, than to a parallel to the axial direction, as seen for instance in Fig. 2 in the ascending portion between axial end portion 7 and the middle portion. However, a portion of the inner contour Cᵢ in the ascending or descending branch may also extend approximately linearly, as is shown, for instance, in Fig. 2 between the middle portion and the other axial end portion 8. In the present embodiment, such selection is made as, shown in Fig. 2, the transverse width of the axial end portion 8 may preferably be lower than that of the other axial end portion 7. The bulged portion can be seen in an extension of the width of bottom 4 when going from the axial ends 7 or 8, respectively, to the spring seat S.

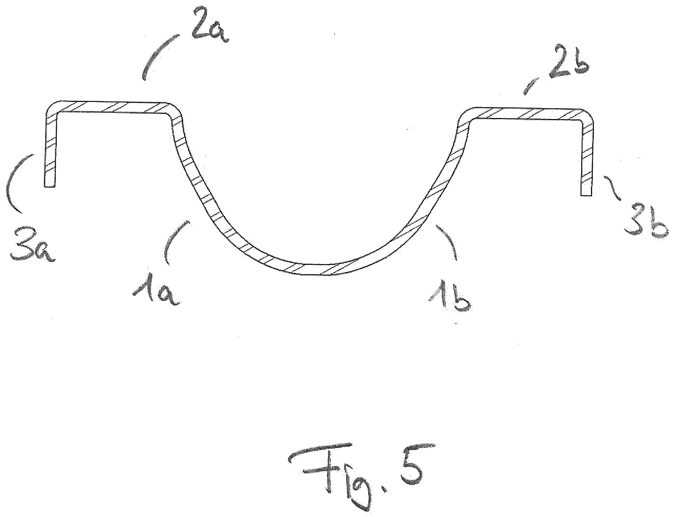

As can be seen in particular from Fig. 4 and also from Fig. 5, in the shown embodiment the transition of the inner wall 1 to bottom 4 is smooth in that a lower portion of the inner wall 1 is arc-like.

At portion 11 close to transition into the bulged portion, the inertia ratio defined by the area moment of inertia I_{y} effective for bending in height direction divided by the area moment of inertia I_{z} effective for bending in transverse direction of the cross section of side wall structure 5 taken alone is about 0.42, which is in the exemplary embodiment about 3 times lower than the inertia ratio at the axial center of the bulged portion. The upper half inertia ratio at portion 11 is, in this exemplary embodiment, about 0.2 and about half of that at maximum bulging.

As known in the art, for determining the area moment of inertia of a structure, one may divide the structure into single parts of simple structure, each of the single parts giving a contribution arising from the part seen alone and the "stoner" part, being its surface times its squared distance in respective bending direction from area center of gravity of the structure. Of course, mathematical software tools can be used to input the cross-sectional structure for automatic calculation of I_{y} and I_{z}.

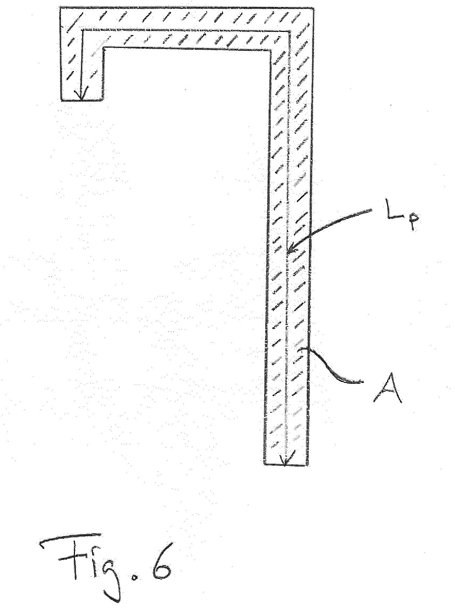

The dimensionless (upper half dimensionless) transverse area moment of inertia at portion 11/maximum bulging is, in this exemplary embodiment, about 2.6 % (3.8 %)/1.5 % (2.8 %). The quantities used for said I_{z}/(A · Lₚ · Lₚ) are shown in the explanatory sketch of Fig. 6.

Turning back to Fig. 2, in the exemplified embodiment an outer contour Cₒ of the side wall structure 5 given by the lateral outer end of transverse flange portion 2 is provided in a manner to have still significant spacing W from the center line in an axial region of transition into the bulged portion. In the present embodiment, the outer contour Cₒ is smooth, having, over an axial interval of at least half of the overall axial length L of the spring link 10 centered at maximum bulging, an averaged squared gradient of about 0.03. Further, said transverse width W at said transition is not lower than about 80% of the width W at the axial center of the bulged portion or at maximum bulging 13, also in a region being spaced apart from the axial center of the bulged portion by at least 20% of the axial overall length.

Further, in the exemplified embodiment, a ratio of the transverse spacing w between outer contour Cₒ and inner contour Cᵢ, to the transverse distance (W-w) of the inner contour Cᵢ from the center line C_{L}, at the transition 11 is about 0.85 and is about 1.6 times larger than at the center 13 of the bulged portion. The inner ratio as defined above (W-w at 11 versus at maximum bulging) is here about 0.73. The fluke ratio as defined above is here about 0.21.

Similar, also versus the other axial end 7, structural features as described in more detail with respect to Fig. 5 on the other axial side, are present, regarding still a significant W far from center bulging 13 and closer to the transition 12 between end portion and bulging portion. Further, also in said portion 12, the inertia ratio is similar to those at transition region 11, wherein corresponding inertia ratio of conventional designs as for instance in DE 10 2006 032 595 A1 is in the range of about 2.4.

With the structural design of the enclosed spring link, for a given material volume, a satisfying combination of stiffness against axial compression and stiffness against vertical forces can be obtained, such that favorable spring links can be designed according to respective stiffness requirements without too much weight increase even for materials having significantly lower Young's modulus than steel, such as aluminium.

The invention is not limited to the details shown in the above embodiment. Rather, features of the above description as well as of the subsequent claims can be essential for the claimed invention alone or in combination.

## Claims

1. Spring link (10) for a vehicle suspension, extending along an axial direction (x) and comprising:
a bottom (4) extending axially and in a transverse direction (y) and, at its both transverse sides,
side structures (5) extending axially and along a height direction (z), and being connected with each other only at their bottom side,
a wheel-side mounting portion (7a, 7b) and a vehicle-side mounting portion (8a, 8b) at its respective axial end portions (7, 8), and
a seat (S) for spring/damping means arranged axially between the axial end portions in a transversely outwardly bulged middle portion (6) of the bottom (4), and an intermediate portion axially at a transition into the bulged middle portion,
**characterized in that** at a first portion (11) axially closer to the intermediate portion than to the center (13) of the bulged portion,
an inertia ratio (I_{y}/I_{z}) defined by the area moment of inertia (I_{y}) effective for bending in height direction (z) divided by the area moment of inertia (I_{z}) effective for bending in transverse direction (y) of the cross-section of a side structure taken alone is lower than 1.8, preferably lower than 1.4, in particular lower than 1.0,
and/or an upper half inertia ratio being the inertia ratio of only that part of the cross-section of one / the side structure having passed beyond half of its height (H/2), taken alone, is lower than 0.36, preferably lower than 0.32, in particular lower than 0.28.

2. Spring link according to claim 1, wherein at said first portion a dimensionless transverse area moment of inertia defined by the area moment of inertia (I_{z}) effective for bending in transverse direction (y) of the cross-section of the side wall structure divided by the product of the area and the squared profile length of said cross-section is, in %, larger than 1.2, preferably larger than 1.6, in particular larger than 2.0, and/or the upper half dimensionless transverse area moment of inertia is, in %, larger than 2.0, preferably larger than 2.6, in particular larger than 3.2.

3. Spring link according to claim 1 or 2, wherein the inertia ratio of the side structure at maximum bulging of the bulged portion is lower than 2.4, preferably lower than 2.0, in particular lower than 1.6, and/or the respective upper half inertia ratio is lower than 0.8, preferably lower than 0.72, in particular lower than 0.64.

4. Spring link according to any of the preceding claims, wherein at maximum bulging (13) the dimensionless transverse area moment of inertia, in %, is larger than 0.6, preferably larger than 0.9, in particular larger than 1.2, and/or the upper half dimensionless transverse area moment of inertia, in %, is larger than 1.6, preferably larger than 2.0, in particular larger than 2.4.

5. Spring link according to any of the preceding claims, wherein the bottom (4) extends axially along its center line (C_{L}) and wherein, an outer contour (Cₒ) of the side structure being defined by the curve of its side opposite to its bottom side in projection into the axial-transversal plane, an outer ratio defined by the ratio of the transverse distance (W) between the outer contour and the center line at the first portion to the corresponding distance at maximum bulging is at least 0.8.

6. Spring link according to any of the preceding claims, wherein the axial distance of the first portion from maximum bulging is at least 20 % of the axial length of the bulged portion, preferably at least 25%, in particular at least 30 %, and/or larger than 15 % of the overall axial length of the spring link, in particular larger than 20 % thereof.

7. Spring link according to any of the preceding claims, having a second portion (12) with one or more of the characteristics defined in the preceding claims for the first portion, but at the other axial side of maximum bulging than the first portion.

8. Spring link according to any of the preceding claims, wherein the side structures each comprise an inner wall (2a; 2b) forming together with the bottom (4) of the spring link an inner structure of the spring link which has an essentially U-shaped cross-section, the inner walls having a top inner contour (Cᵢ) at their top side opposite to their bottom side, wherein at said first and/or second portion, an inner ratio defined by the ratio of the transverse distance (W-w) between the top inner contour and the center line to the corresponding distance at the maximum bulging is less than 0.9 and/or a first value given by the outer ratio divided by the inner ratio of larger than 1.1, preferably larger than 1.2.

9. Spring link according to any of the preceding claims, wherein, at said first and/or second portion (11, 12), a contour ratio defined by the transverse distance (w) between the outer contour and the top inner contour to the distance (W-w) between the top inner contour and the center line is larger than 0.25, preferably larger than 0.33 and preferably lower than 1.3, and/or the product of said contour ratio with the first value is larger than 0.30, preferably larger than 0.36, in particular larger than 0.42.

10. Spring link according to any of the preceding claims, wherein a fluke ratio being the ratio of the transverse distance of the outer contour from the center line of at least one side structure to the overall axial length, is, averaged between said first and second portion (11, 12), larger than 0.14, preferably than 0.16, in particular than 0.18.

11. Spring link according to any of the preceding claims, wherein, the squared gradient of the outer contour averaged between the first and the second portion (11, 12) is lower than 0.08, in particular lower than 0.04.

12. Spring link according to any of the preceding claims, wherein the spring link is of one piece and/or made from aluminium or an aluminium alloy.

13. Spring link according to any of the preceding claims, with a stiffness against axial compression in the axial direction of more than 24 kN/mm and /or a stiffness in height direction (z) of more than 5 kN/mm.

14. Vehicle suspension, comprising a spring link according to any of the preceding claims.

15. Vehicle comprising a vehicle suspension with a spring link according to any of claims 1 to 13.
